(19) Europäisches Patentamt / European Patent Office / Office européen des brevets

(11) **EP 4 468 457 A1**

(12) **EUROPEAN PATENT APPLICATION**

(43) Date of publication:
**27.11.2024   Bulletin 2024/48**

(21) Application number: **24167005.8**

(22) Date of filing: **27.03.2024**

(51) International Patent Classification (IPC):
**H01M 10/615** (2014.01)    **H01M 10/625** (2014.01)
**H01M 10/633** (2014.01)    **H01M 10/6567** (2014.01)
**B60H 1/00** (2006.01)

(52) Cooperative Patent Classification (CPC):
**H01M 10/615; B60H 1/00; B60L 58/26;
B60L 58/27; H01M 10/625; H01M 10/633;
H01M 10/6567;** B60L 50/64; H01M 2220/20

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **22.05.2023   JP 2023083685**

(71) Applicant: **TOYOTA JIDOSHA KABUSHIKI
KAISHA**
**Toyota-shi, Aichi-ken, 471-8571 (JP)**

(72) Inventors:
• **ASANUMA, Kentaro**
 **Okazaki-shi, Aichi-ken, 471-8571 (JP)**
• **TANAKA, Hiromasa**
 **Okazaki-shi, Aichi-ken, 471-8571 (JP)**

(74) Representative: **Cabinet Beau de Loménie
158, rue de l'Université
75340 Paris Cedex 07 (FR)**

(54) **CONTROLLER FOR HEATING SYSTEM, VEHICLE INCLUDING THE SAME, AND METHOD FOR MANAGING HEAT MEDIUM**

(57)     A temperature management system (40) heats a battery (10) using a liquid heat medium (an LLC). A battery ECU (50), which is a controller for the temperature management system (40), includes a processor (51) that calculates an upper limit temperature of the LLC during heating of the battery (10). The processor (51) lowers the upper limit temperature, as thermal deterioration of the LLC progresses.

FIG.1

EP 4 468 457 A1

## Description

CROSS REFERENCE TO RELATED APPLICATIONS

This nonprovisional application is based on Japanese Patent Application No. 2023-083685 filed on May 22, 2023 with the Japan Patent Office, the entire contents of which are hereby incorporated by reference.

## BACKGROUND

Field

The present disclosure relates to a controller for a heating system, a vehicle including the same, and a method for managing a heat medium, and more specifically, to a technique of heating a battery by heat exchange between a liquid heat medium and the battery.

Description of the Background Art

Japanese Patent Laying-Open No. 2016-112933 discloses a warm-up device for a battery for a vehicle. The warm-up device includes a heat exchange circuit that exchanges heat between a refrigerant and the battery by causing the refrigerant to flow therethrough.

## SUMMARY

Generally, under a low temperature environment, charging/discharging performance of a battery (power that a battery can charge/discharge) may be degraded. Accordingly, an electrically powered vehicle is equipped with a heating system that performs heating (also referred to as heat-up or warm-up) of a battery by heat exchange between the battery and a liquid heat medium. In particular, a heat medium (coolant) for a vehicle has a high electrical insulation property in case of leakage.

The present inventors focused attention to that the following problem may occur in such a heating system. If the temperature of the heat medium is raised excessively to heat the battery, the heat medium may be thermally deteriorated and the electrical insulation property of the heat medium may be degraded. Therefore, it is desirable to suppress thermal deterioration of the heat medium while securing heating performance of the heat medium (charging/discharging performance of the battery achieved thereby), in other words, to secure the performance and suppress the deterioration of the heat medium.

The present disclosure has been made to solve the aforementioned problem, and one of the objects of the present disclosure is to secure performance and suppress deterioration of a heat medium.

(1) In a controller for a heating system in accordance with an aspect of the present disclosure, the heating system heats a battery using a liquid heat medium. The controller includes a processor that calculates an upper limit temperature of the heat medium during heating of the battery. The processor lowers the upper limit temperature, as thermal deterioration of the heat medium progresses.

In the configuration described above in (1), when the thermal deterioration of the heat medium does not progress, heating performance of the heat medium can be improved by raising the upper limit temperature. On the other hand, when the thermal deterioration of the heat medium progresses, further progress of the thermal deterioration of the heat medium can be suppressed by lowering the upper limit temperature. Therefore, it is possible to secure the performance and suppress the deterioration of the heat medium.

(2) The processor calculates an index indicating a degree of progress of the thermal deterioration of the heat medium based on a temperature of the heat medium, estimates a life of the heat medium based on the index, and lowers the upper limit temperature when the life is estimated to be shorter than a predetermined period, when compared with a case where the life is estimated to be longer than the predetermined period.

According to the configuration described above in (2), since the upper limit temperature is lowered when the life is estimated to be shorter than the predetermined period, the thermal deterioration of the heat medium is suppressed. Thereby, the life of the heat medium can be longer than the predetermined period.

(3) The processor repeatedly performs computation processing for calculating the index. The computation processing includes processing of calculating, based on the temperature of the heat medium in a period from a previous computation to a current computation, a micro index indicating a degree of progress of the thermal deterioration of the heat medium in the period, and calculating the index up to the current computation, by adding the micro index in the period, to the index up to the previous computation.

(4) The processor calculates the micro index based on a product of a frequency of the temperature of the heat medium in the period and a coefficient determined for each temperature of the heat medium. According to the configuration described above in (3) and (4), the index can be calculated with high accuracy (that is, the degree of progress of the thermal deterioration of the heat medium can be evaluated with high accuracy).

(5) The processor shortens a computation interval of the computation processing, as the index indicates that the thermal deterioration of the heat medium progresses.

In the configuration described above in (5), in a stage where the thermal deterioration of the heat medium does not progress, a computation load on the processor for calculating the index can be reduced by lengthening the computation interval. On the other hand, by shortening the computation interval as the thermal deterioration of the heat medium progresses, the upper limit temperature can be adjusted based on the accurate index. As a result, excessive thermal deterioration of the heat medium can be suppressed more reliably.

(6) The processor performs first life estimation processing. The first life estimation processing includes processing of calculating the index based on information of a region where the heating system is used.

(7) The first life estimation processing includes processing of calculating the index when a temperature load in the region where the heating system is used is applied to the heat medium.

(8) The first life estimation processing includes processing of calculating the index when a use load in the region where the heating system is used is applied to the heat medium.

(9) The processor performs second life estimation processing. The second life estimation processing includes processing of estimating the life by regression analysis of the index over an entire period.

(10) The processor performs third life estimation processing. The third life estimation processing includes processing of estimating the life by regression analysis of a portion of the index over an entire period, the portion including the index up to the current computation.

(11) The processor performs fourth life estimation processing. The fourth life estimation processing includes processing of combining a result of first life estimation processing and a result of second life estimation processing. The first life estimation processing includes processing of calculating the index based on information of a region where the heating system is used. The second life estimation processing includes processing of estimating the life by regression analysis of the index over an entire period.

(12) The processor increases a ratio of the result of the second life estimation processing used for the fourth life estimation processing, as the index indicates that the thermal deterioration of the heat medium progresses.

According to the configuration described above in (6) to (12), the life of the heat medium can be estimated with high accuracy, according to the region (the first life estimation processing), an actual status of use over the entire period (the second life estimation processing), the latest actual status of use (the third life estimation processing), both the region and the status of use (the fourth life estimation processing), and the like.

(13) The predetermined period is a guarantee period for the heat medium.

According to the configuration described above in (13), the life of the heat medium can be longer than the guarantee period for the heat medium.

(14) A vehicle in accordance with another aspect of the present disclosure includes the controller, and the heating system.

(15) A method for managing a heat medium in accordance with another aspect of the present disclosure includes calculating an upper limit temperature of a liquid heat medium, and heating a battery using the heat medium. The calculating includes lowering the upper limit temperature, as thermal deterioration of the heat medium progresses.

According to the configuration described above in (14) and the method described above in (15), it is possible to secure the performance and suppress the deterioration of the heat medium, as with the configuration described above in (1).

The foregoing and other objects, features, aspects, and advantages of the present disclosure will become more apparent from the following detailed description of the present disclosure when taken in conjunction with the accompanying drawings.

BRIEF DESCRIPTION OF THE DRAWINGS

Fig. 1 is a view schematically showing an overall configuration of a vehicle equipped with a heating system in accordance with an embodiment of the present disclosure.
Fig. 2 is a flowchart showing an example of a processing procedure for thermal deterioration evaluation in the present embodiment.
Fig. 3 is a view showing an example of a technique of determining a computation interval for summed thermal deterioration.
Fig. 4 is a conceptual diagram for illustrating a technique of calculating thermal deterioration of a heat medium.
Fig. 5 is a view for illustrating how to determine an upper limit temperature in a comparative example.
Fig. 6 is a view for illustrating a summary of upper limit temperature control in the present embodiment.
Fig. 7 is a flowchart showing an example of a processing procedure for the upper limit temperature control in the present embodiment.
Fig. 8 is a flowchart showing an example of a processing procedure for life estimation processing.
Fig. 9 is a time chart for illustrating an example of the life estimation processing.
Fig. 10 is a view showing an example of a technique of determining a ratio.
Fig. 11 is a view for illustrating determination processing in step 4.

Fig. 12 is a flowchart showing an example of a processing procedure for first control.

Fig. 13 is a time chart for illustrating the first control.

Fig. 14 is a flowchart showing an example of a processing procedure for second control.

Fig. 15 is a time chart for illustrating the second control.

Fig. 16 is a flowchart showing an example of a processing procedure for third control.

Fig. 17 is a time chart for illustrating the third control.

Fig. 18 is a flowchart showing an example of a processing procedure for fourth control.

Fig. 19 is a time chart for illustrating the fourth control.

DESCRIPTION OF THE PREFERRED EMBODIMENTS

Hereinafter, an embodiment of the present disclosure will be described in detail with reference to the drawings. It should be noted that identical or corresponding parts in the drawings will be designated by the same reference numerals, and the description thereof will not be repeated.

In the following embodiment, a configuration in which a heating system (and a controller therefor) in accordance with the present disclosure is mounted in a vehicle will be described as an example. However, the application of the heating system in accordance with the present disclosure is not limited to an application for vehicles. The heating system in accordance with the present disclosure is applicable to any application (for example, stationary application).

[Embodiment]

<Vehicle Configuration>

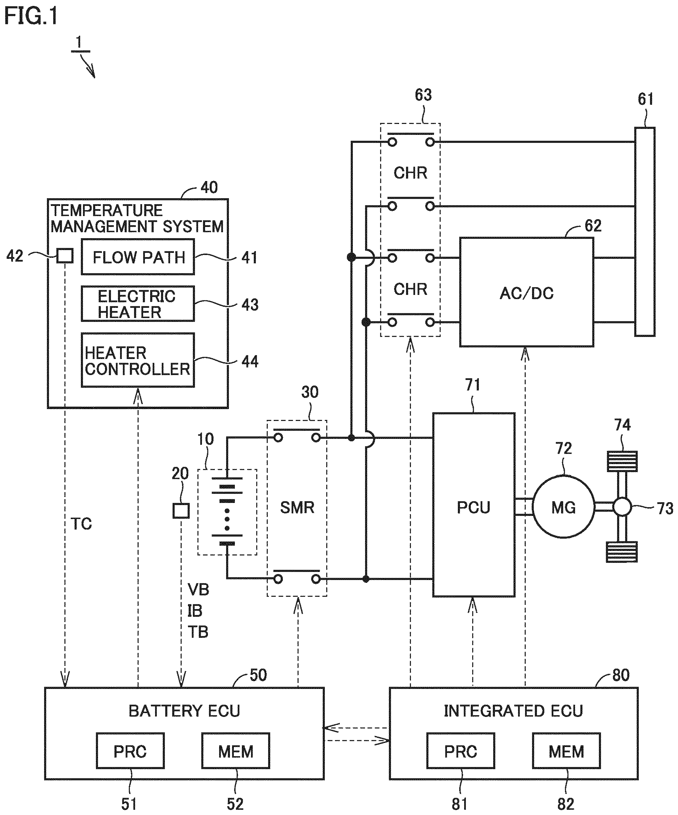

Fig. 1 is a view schematically showing an overall configuration of a vehicle equipped with a heating system in accordance with an embodiment of the present disclosure. A vehicle 1 is an electrically powered vehicle equipped with a battery. In this example, vehicle 1 is a battery electric vehicle (BEV). Vehicle 1 may be a plug-in hybrid electric vehicle (PHEV), or may be a fuel cell electric vehicle (FCEV). Vehicle 1 may be a hybrid electric vehicle (HEV) that does not support plug-in charging.

Vehicle 1 includes a battery 10, a monitoring unit 20, a system main relay (SMR) 30, a temperature management system 40, a battery ECU (Electronic Control Unit) 50, an inlet 61, an AC (alternate current)/DC (direct current) converter 62, a charge relay (CHR) 63, a power control unit (PCU) 71, a motor generator (MG) 72, a motive power transmission gear 73, drive wheels 74, and an integrated ECU 80, for example.

Battery 10 is a battery assembly including a plurality of cells. Each cell is typically a liquid-type secondary battery (such as a lithium ion battery or a nickel hydride battery), but may be an all-solid-state battery. Battery 10 stores power for driving MG 72 and supplies the power to MG 72 through PCU 71. Further, when MG 72 generates power, battery 10 receives the generated power through PCU 71 and is charged.

Monitoring unit 20 includes various sensors for monitoring the state of battery 10. Specifically, monitoring unit 20 includes a voltage sensor, a current sensor, and a temperature sensor (neither is shown). The voltage sensor detects a voltage VB of battery 10 (each cell). The current sensor detects a current IB charged to or discharged from battery 10. The temperature sensor detects a temperature TB of battery 10 (at least one cell). Each sensor outputs a detection value thereof to battery ECU 50.

SMR 30 is electrically connected to power lines connecting between battery 10 and PCU 71 and between battery 10 and CHR 63. SMR 30 is opened or closed according to a command from battery ECU 50. When SMR 30 is opened (turned off), battery 10 is electrically separated from PCU 71 and CHR 63. When SMR 30 is closed (turned on), battery 10 is electrically connected to PCU 71 and CHR 63.

Temperature management system 40 is configured to adjust the temperature of battery 10 using a liquid heat medium, according to a control command from battery ECU 50. Temperature management system 40 corresponds to a "heating system" in accordance with the present disclosure. Temperature management system 40 includes a flow path 41, a coolant temperature sensor 42, an electric heater 43, and a heater control device 44, for example.

Flow path 41 includes a circuit of a pipe through which the heat medium flows (circulates). In the present embodiment, flow path 41 is configured to cool battery 10 when battery 10 has a high temperature by causing the heat medium to flow through the circuit, and is also configured to perform heating (heat-up or warm-up) of battery 10 under an environment with a low temperature (for example, more than or equal to -20°C and less than 0°C) or a very low temperature (for example, less than -20°C). In the following, the heat medium is referred to as an "LLC" (Long Life Coolant). The LLC has a high electrical insulation property in case of leakage.

Coolant temperature sensor 42 detects a temperature TC of the LLC (hereinafter referred to as a "coolant temperature"), and outputs a detection value thereof to battery ECU 50.

Electric heater 43 is a PTC (Positive Temperature Coefficient) heater, for example, and heats the LLC. Thereby, battery 10 is heated.

Heater controller 44 controls electric heater 43 according to the control command from battery ECU 50. More specifically, in the present embodiment, battery ECU 50 provides heater controller 44 with a command about an upper limit temperature UL in an allowable temperature range of coolant temperature TC. Heater controller 44 controls electric heater 43 such that coolant temperature TC may approach upper limit temperature UL but not exceed upper limit temperature UL. Electric heater 43 may be controlled by switching electric heater 43 (turning on/off electric heater 43), or by adjusting an output from electric heater 43.

Battery ECU 50 includes a processor 51 and a memory 52. Processor 51 is a computation processing unit such as a CPU (Central Processing Unit) or an MPU (Micro Processing Unit). Memory 52 is a storage device including a ROM (Read Only Memory) and a RAM (Random Access Memory). Memory 52 stores a system program including an OS (Operating System), a control program including computer-readable codes, and various parameters for managing battery 10. Processor 51 implements a variety of processing by reading the system program, the control program, and the parameters, loading them in memory 52, and executing them.

In the present embodiment, battery ECU 50 performs "thermal deterioration evaluation" for quantitatively evaluating a degree of progress of thermal deterioration of the LLC. Further, battery ECU 50 performs "upper limit temperature control" for controlling the temperature of the LLC (coolant temperature TC) within an appropriate temperature range, according to the result of the thermal deterioration evaluation. The thermal deterioration evaluation and the upper limit temperature control will be described in detail later. It should be noted that battery ECU 50 corresponds to a "controller" in accordance with the present disclosure.

Inlet 61 is configured such that, on the occasion of the plug-in charging, a charging connector (not shown) provided at a tip of a charging cable may be connected thereto with mechanical coupling. By connecting the charging connector to inlet 61, electrical connection between a charging facility (not shown) and vehicle 1 is secured. In this example, inlet 61 supports both AC charging (normal charging) and DC charging (fast charging).

AC/DC converter 62 converts AC power supplied from an AC charging facility via the charging cable into DC power for charging battery 10. Vehicle 1 may include a DC/DC converter that supports DC charging (not shown), instead of or in addition to AC/DC converter 62.

CHR 63 is connected to power lines that are charging paths from inlet 61, in series with SMR 30. CHR 63 is opened or closed according to a command from integrated ECU 80. When CHR 63 is closed and SMR 30 is closed, battery 10 can be charged using power from inlet 61.

PCU 71 is electrically connected between SMR 30 and MG 72. PCU 71 includes a converter and an inverter (neither is shown), and drives MG 72 according to a command from integrated ECU 80.

MG 72 is an AC rotating electric machine, and is, for example, a permanent magnet-type synchronous motor including a rotor having a permanent magnet embedded therein. The output torque of MG 72 is transmitted to drive wheels 74 through motive power transmission gear 73, to cause vehicle 1 to travel. Further, during a braking operation of vehicle 1, MG 72 can generate power using a rotational force of drive wheels 74. The power generated by MG 72 is converted by PCU 71 into charging power for battery 10.

Integrated ECU 80 includes a processor 81 and a memory 82, as with battery ECU 50. Integrated ECU 80 performs a variety of control for controlling vehicle 1 in a desired state, based on signals received from the sensors and programs and maps stored in memory 82. For example, integrated ECU 80 controls power charged or discharged between battery 10 and PCU 71. Further, integrated ECU 80 controls the plug-in charging of vehicle 1 by communicating with the charging facility and controlling AC/DC converter 62 and CHR 63. Battery ECU 50 and integrated ECU 80 are configured such that they can communicate with each other. Battery ECU 50 and integrated ECU 80 may be integrally configured.

<Thermal Deterioration Evaluation>

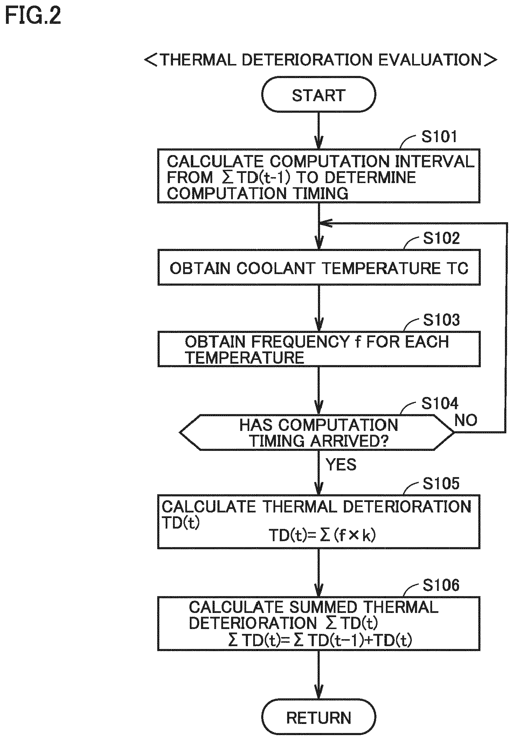

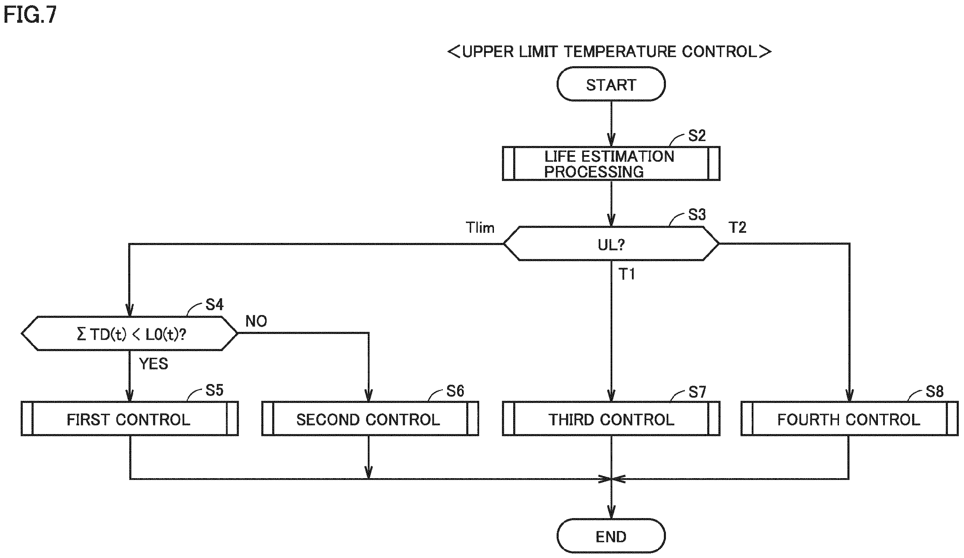

Fig. 2 is a flowchart showing an example of a processing procedure for the thermal deterioration evaluation in the present embodiment. The processing shown in this flowchart is performed when a predetermined condition is satisfied (for example, for each predetermined cycle). Although each step is implemented by software processing by battery ECU 50, it may be implemented by hardware (electrical circuitry) arranged within battery ECU 50. The same applies to the upper limit temperature control described later (see Fig. 7). In the following, the step will be abbreviated as S.

A summary of the thermal deterioration evaluation will be described. Battery ECU 50 calculates an index indicating a degree of progress of the thermal deterioration of the LLC in a period from a previous computation to a current computation. This index is denoted as a "thermal deterioration TD". A currently calculated thermal deterioration is denoted as a "TD(t)", a previously calculated thermal deterioration is denoted as a "TD(t-1)", and a thermal deterioration calculated prior to the previously calculated thermal deterioration is denoted as a "TD(t-2)". The same applies to thermal deteriorations prior to that. Furthermore, battery ECU 50 calculates an index indicating a degree of progress of the thermal deterioration of the LLC at present, by summing thermal deteriorations from the start (a first computation) to the present (the current computation) (that is, from TD(t0) to TD(t)). This index is denoted as a "summed thermal deterioration ΣTD". Summed thermal deterioration ΣTD has an initial value of 0. It should be noted that thermal deterioration TD corresponds to a "micro index" in accordance with the present disclosure, and summed thermal deterioration ΣTD corresponds to an "index" in accordance with the present disclosure.

In S101, battery ECU 50 calculates computation timing of a current summed thermal deterioration ΣTD(t). More specifically, battery ECU 50 calculates a computation interval from the previous computation to the current computation, based on a previously summed thermal deterioration $\Sigma TD(t-1)$. Then, battery ECU 50 determines a time when the computation interval has elapsed from a computation time of previous summed thermal deterioration $\Sigma TD(t-1)$, as the computation timing of current summed thermal deterioration $\Sigma TD(t)$.

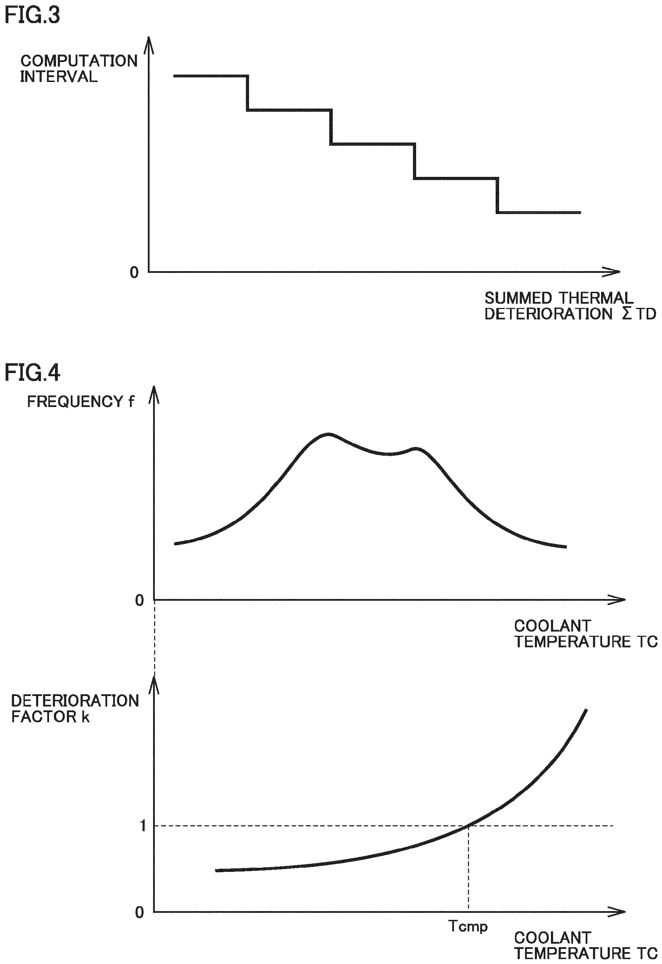

Fig. 3 is a view showing an example of a technique of determining the computation interval for the summed thermal deterioration. The axis of abscissas represents previously summed thermal deterioration $\Sigma TD(t-1)$. The axis of ordinate represents the computation interval from the previous computation to the current computation. As shown in Fig. 3, the computation interval is determined be shorter, as previously summed thermal deterioration $\Sigma TD(t-1)$ is larger (that is, as the thermal deterioration of the LLC progresses).

In a stage where summed thermal deterioration $\Sigma TD$ is small (in a case where the thermal deterioration of the LLC does not progress much), a computation load on battery ECU 50 consumed for the thermal deterioration evaluation can be reduced by lengthening the computation interval. On the other hand, by shortening the computation interval as summed thermal deterioration $\Sigma TD$ becomes larger (as the thermal deterioration of the LLC progresses), the upper limit temperature control described later can be performed based on accurate summed thermal deterioration $\Sigma TD$. As a result, excessive thermal deterioration of the LLC can be suppressed more reliably.

It should be noted that Fig. 3 shows an example in which the computation interval decreases in a stepwise manner with an increase in summed thermal deterioration $\Sigma TD$. However, the computation interval may be shortened continuously (linearly or curvilinearly) with an increase in summed thermal deterioration $\Sigma TD$. Alternatively, the computation interval may be constant irrespective of summed thermal deterioration $\Sigma TD$.

Returning to Fig. 2, in S102, battery ECU 50 obtains coolant temperature TC from coolant temperature sensor 42. Then, battery ECU 50 calculates a frequency f of coolant temperature TC (for example, a frequency in each temperature range when coolant temperature TC is classified per degree Celsius) (S103).

In S104, battery ECU 50 determines whether the computation timing calculated in S101 has arrived. When the computation timing has not arrived (NO in S104), battery ECU 50 returns the processing to S 102. Thereby, obtaining of coolant temperature TC and calculation of frequency f are performed again. When the computation timing has arrived (YES in S 104), battery ECU 50 advances the processing to S 105, to calculate current thermal deterioration TD(t).

Fig. 4 is a conceptual diagram for illustrating a technique of calculating the thermal deterioration of the LLC (the processing in S105). The axis of abscissas represents coolant temperature TC. The upper axis of ordinate represents frequency f of coolant temperature TC, and the lower axis of ordinate represents a deterioration factor k. Frequency f of coolant temperature TC is obtained by the processing in S102 and S103.

Large deterioration factor k indicates that the degree of progress of the thermal deterioration of the LLC is large. The higher coolant temperature TC is, the larger deterioration factor k is. Deterioration factor k is determined by a prior experiment, according to the specification of the LLC. In the present embodiment, deterioration factor k at an upper limit temperature Temp (described later) in a comparative example is determined as 1. In the case of TC < Temp, deterioration factor k is determined as k < 1. In the case of TC > Temp, deterioration factor k is determined as k > 1.

Battery ECU 50 multiplies frequency f by deterioration factor k for each temperature range (for example, 1°C) of coolant temperature TC. Then, battery ECU 50 adds products (f×k) for all the temperature ranges of coolant temperature TC. Thereby, current thermal deterioration TD(t) is calculated (see equation (1)).

$$TD(t) = \Sigma(f \times k) \ldots (1)$$

Returning to Fig. 2, in S106, battery ECU 50 calculates currently summed thermal deterioration $\Sigma TD(t)$ by adding current thermal deterioration TD(t) to previously summed thermal deterioration $\Sigma TD(t-1)$ (see equation (2)).

$$\Sigma TD(t) = \Sigma TD(t-1) + TD(t) \ldots (2)$$

<Upper Limit Temperature Control>

In order to clarify the feature of the upper limit temperature control in the present embodiment, temperature control in a comparative example will be described first.

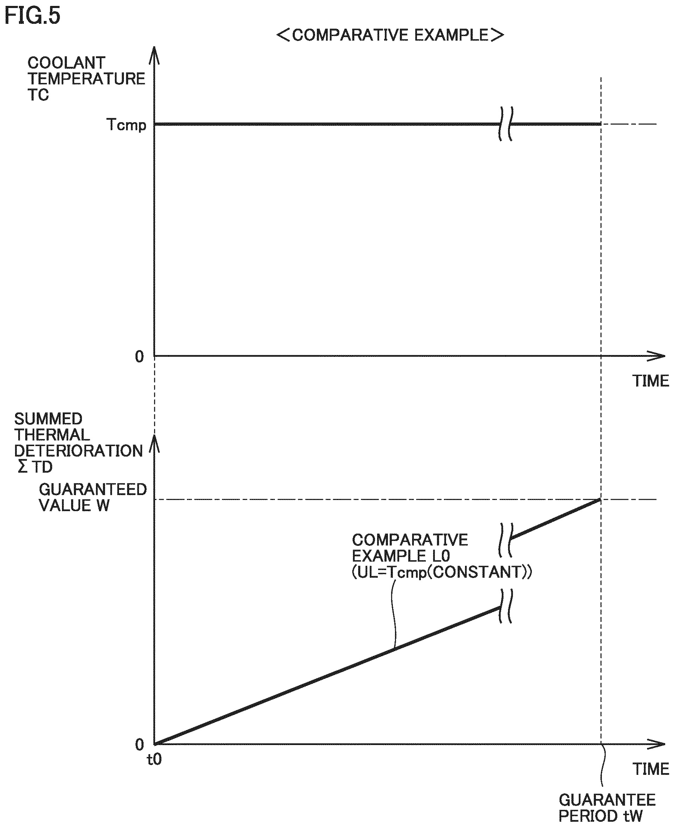

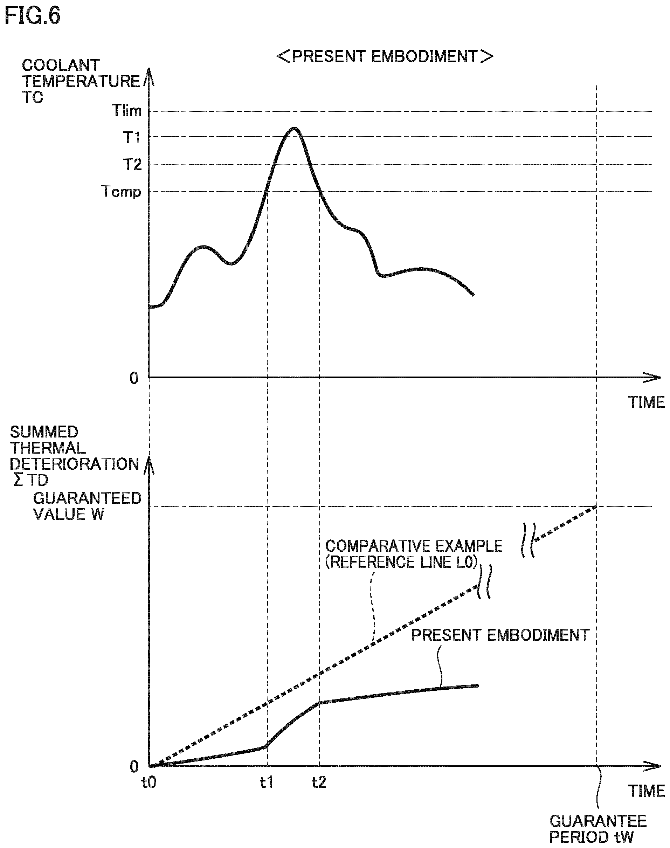

Fig. 5 is a view for illustrating how to determine an upper limit temperature in a comparative example. The axis of abscissas represents an elapsed time from an initial time t0 (for example, the time when the LLC was manufactured). The upper axis of ordinate represents coolant temperature TC, and the lower axis of ordinate represents summed thermal deterioration $\Sigma TD$. The same applies to Fig. 6 described later.

In the comparative example, upper limit temperature UL that allows change of coolant temperature TC is set to Temp. In the comparative example, upper limit temperature UL = Temp is maintained to be constant over the entire period. Temp is determined such that summed thermal deterioration $\Sigma TD$ at a time when a guarantee period tW for the LLC (for example, tW = 20 years) has elapsed may reach a guaranteed value W. Guaranteed value W is a value at which the LLC can secure a necessary electrical insulation property even if UL = Temp is always maintained until guarantee period tW elapses, and is determined based on the result of an evaluation test (a characteristic test for the electrical insulation property) on the LLC. When summed thermal deterioration $\Sigma$TD reaches guaranteed value W, it means that the LLC reaches the end of its life.

When coolant temperature TC reaches upper limit temperature UL = Temp, further heating of the LLC is restricted (prohibited), and thus charging/discharging performance (in particular, charging performance during DC charging) of battery 10 cannot be secured sufficiently. On the other hand, when coolant temperature TC is set to be higher than Temp, the thermal deterioration of the LLC may progress excessively quickly, and the electrical insulation property of the LLC may not be able to be secured until guarantee period tW for the LLC elapses. It is desirable to suppress the thermal deterioration of the LLC while securing heating performance of the LLC (securing the charging/discharging performance of battery 10 achieved thereby), in other words, to secure the performance and suppress the deterioration of the LLC. Accordingly, in the present embodiment, upper limit temperature UL is set to be variable. More specifically, upper limit temperature UL is set to be lower, as the thermal deterioration of the LLC progresses.

Fig. 6 is a view for illustrating a summary of the upper limit temperature control in the present embodiment. In this example, upper limit temperature UL is set to one of three types: Tlim, T1, and T2. These three temperatures have the relation of Tlim > T1 > T2, and they are all higher than upper limit temperature Temp in the comparative example.

In the example shown in Fig. 6, in a period from a time t1 to a time t2, coolant temperature TC exceeds upper limit temperature Temp in the comparative example. Accordingly, deterioration factor k in this period is determined as k > 1 (see Fig. 4). Therefore, in this period, thermal deterioration TD(t) is larger and summed thermal deterioration $\Sigma$TD increases at a faster rate, when compared with a reference line L0 in the comparative example at which k = 1. Conversely, in a period other than this period, deterioration factor k is determined as k < 1. Therefore, in the period other than this period, thermal deterioration TD(t) is smaller and summed thermal deterioration $\Sigma$TD increases at a slower rate (with a lower gradient), when compared with reference line L0 in the comparative example at which k = 1.

Thus, even when upper limit temperature UL is set to be variable according to coolant temperature TC, it is possible to prevent summed thermal deterioration $\Sigma$TD at the time when the guarantee period has elapsed from exceeding guaranteed value W, by appropriately calculating summed thermal deterioration $\Sigma$TD according to coolant temperature TC in accordance with the thermal deterioration evaluation described above (see Fig. 2). Thereby, excessive thermal deterioration of the LLC can be suppressed. In addition, by allowing coolant temperature TC to rise above Temp, heating of the LLC is not restricted unnecessarily. As a result, the charging/discharging performance of battery 10 can be secured.

<<Overall Processing Flow>>

Fig. 7 is a flowchart showing an example of a processing procedure for the upper limit temperature control in the present embodiment. When a series of processing is started, battery ECU 50 sets upper limit temperature UL of the LLC to Tlim, which is the highest, for example.

In S2, battery ECU 50 performs life estimation processing for estimating the life of the LLC. The life of the LLC means a period in which the LLC can secure the electrical insulation property required for the LLC. In the present embodiment, five lines are used for the life estimation processing. The five lines include first estimation line L1 to fourth estimation line L4, in addition to reference line L0 as in the comparative example. These lines will be described using the following flowcharts and time charts.

<<Life Estimation Processing>>

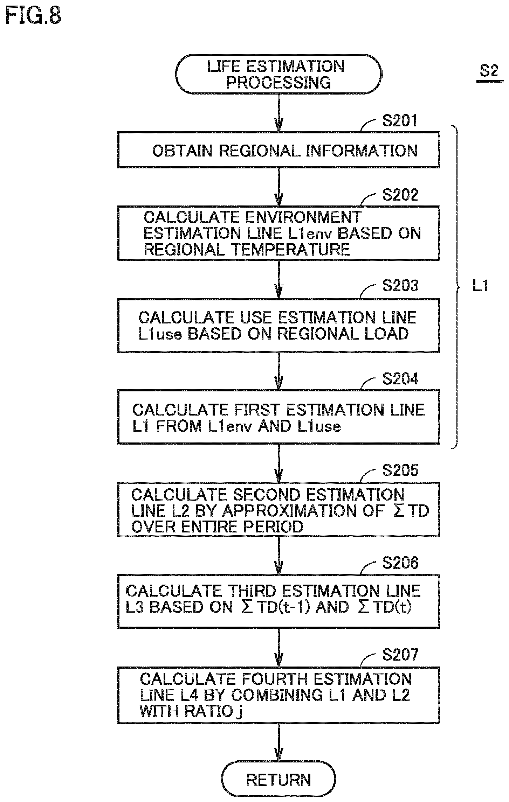

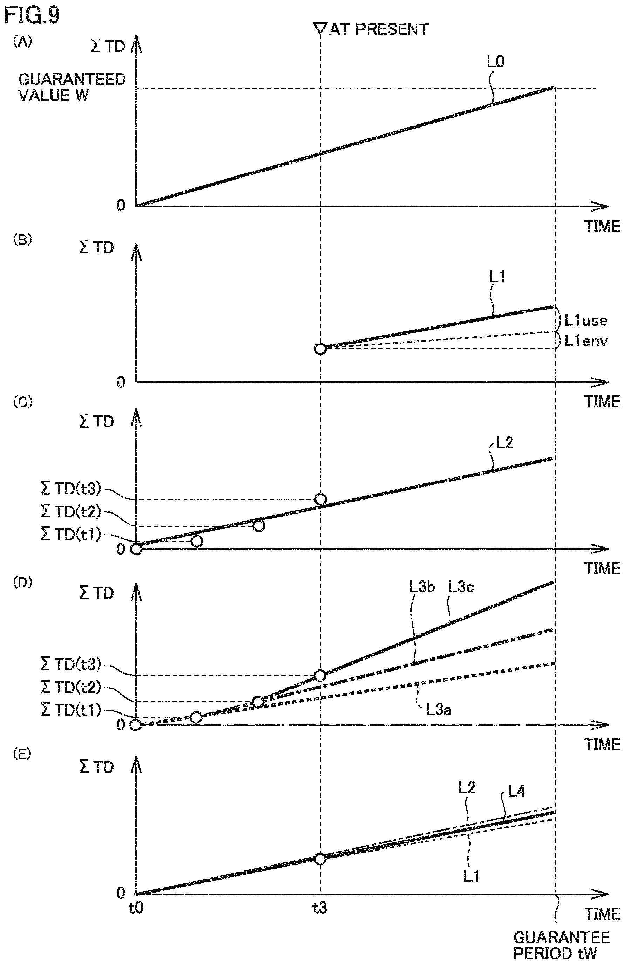

Fig. 8 is a flowchart showing an example of a processing procedure for the life estimation processing. Fig. 9 is a time chart for illustrating an example of the life estimation processing. In Fig. 9, the axis of abscissas represents an elapsed time from initial time t0. The axis of ordinate represents summed thermal deterioration $\Sigma$TD.

Referring to Fig. 9(A), reference line L0 (see Fig. 9(A)) is the same as L0 in the comparative example. As described above, reference line L0 is determined such that summed thermal deterioration $\Sigma$TD may reach guaranteed value W at the time when guarantee period tW for the LLC has elapsed.

Referring to Fig. 8, the processing in S201 to S204 is processing for calculating first estimation line L1. First, in S201, battery ECU 50 obtains regional information of vehicle 1. The regional information is information indicating the location of vehicle 1, and is typically positional information obtained by a GPS (Global Positioning System). However, the regional information may be fixed information such as destination information of vehicle 1.

In S202, battery ECU 50 calculates an environment estimation line Llenv based on the regional information. Environment estimation line Llenv is an estimation line indicating an increase in the summed thermal deterioration when a typical temperature load at the location of vehicle 1 is applied to the LLC, and is determined according to past outside air temperatures in the region. Furthermore, battery ECU 50 calculates a use estimation line Lluse based on the regional information (S203). Use estimation line Lluse is an estimation line indicating an increase in the summed thermal deterioration when a typical use load at the location of vehicle 1 is applied to the LLC, and is determined according to ordinary travelling manners (such as a travelling speed, a gradient, and a travelling time) of the vehicle in the region. Each of environment estimation line Llenv and use estimation line Lluse is prepared beforehand for each region and is stored in memory 52 of battery ECU 50.

In S204, battery ECU 50 calculates first estimation line L1 based on environment estimation line Llenv and use estimation line Lluse. More specifically, first estimation line L1 is calculated by adding environment estimation line Llenv and use estimation line Lluse (adding estimated values at an identical time) (see equation (3)), as shown in Fig. 9(B).

$$L1 = L1env + L1use \dots (3)$$

In S205, battery ECU 50 calculates second estimation line L2 that is a regression line of summed thermal deterioration $\Sigma TD$ over the entire period from initial time t0 to the present. In the example of Fig. 9(C), second estimation line L2 is calculated by the least squares method, for example, to provide a good approximation for four summed thermal deteriorations 0, $\Sigma TD(t1)$, $\Sigma TD(t2)$, and $\Sigma TD(t3)$ from initial time t0 to the present.

In S206, battery ECU 50 calculates third estimation line L3 based on latest two summed thermal deteriorations $\Sigma TD$, that is, previously summed thermal deterioration $\Sigma TD(t-1)$ and currently summed thermal deterioration $\Sigma TD(t)$. More specifically, current third estimation line L3 is a straight line L3c connecting previously summed thermal deterioration $\Sigma TD(t-1)$ and currently summed thermal deterioration $\Sigma TD(t)$. Fig. 9(D) also shows past straight lines L3a and L3b. By calculating third estimation line L3, how the LLC has been used lately can be reflected in life estimation, when compared with a case where only second estimation line L2 is calculated. For example, when summed thermal deterioration $\Sigma TD$ increases quickly, upper limit temperature UL can be lowered quickly (the details will be described later).

In S207, battery ECU 50 calculates fourth estimation line L4 by combining the first estimation line L1 and second estimation line L2 with a ratio of j:(1-j) (0 ≤ j ≤ 1), respectively (see equation (4)).

$$L4 = L1 \times j + L2 \times (1-j) \dots (4)$$

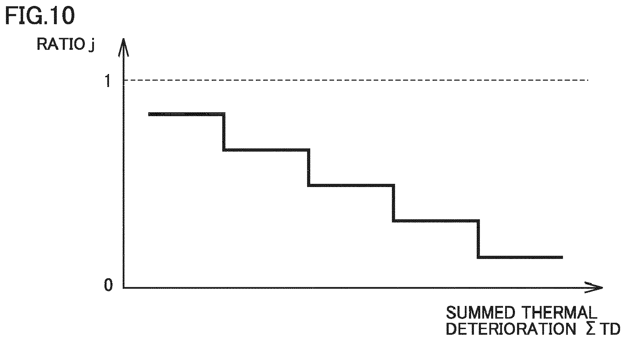

Fig. 10 is a view showing an example of a technique of determining ratio j. The axis of abscissas represents previously summed thermal deterioration $\Sigma TD(t-1)$. The axis of ordinate represents ratio j. As shown in Fig. 10, ratio j is determined to be lower, as previously summed thermal deterioration $\Sigma TD(t-1)$ is larger (that is, as the thermal deterioration of the LLC progresses).

When summed thermal deterioration $\Sigma TD$ is small (when the thermal deterioration of the LLC does not progress much), ratio j is high, and contribution of first estimation line L1 is larger than contribution of second estimation line L2. In that case, in short, fourth estimation line L4 is calculated mainly based on the regional information of vehicle 1 that is data prepared beforehand. On the other hand, since ratio j becomes lower as summed thermal deterioration $\Sigma TD$ becomes larger (as the thermal deterioration of the LLC progresses), the contribution of first estimation line L1 decreases, and the contribution of second estimation line L2 increases. As a result, fourth estimation line L4 is calculated mainly based on summed thermal deterioration $\Sigma TD$ of the LLC over the entire period, in which an actual status of use of vehicle 1 is reflected.

It should be noted that Fig. 10 shows an example in which ratio j decreases in a stepwise manner with an increase in summed thermal deterioration $\Sigma TD$. However, ratio j may decrease continuously (linearly or curvilinearly) with an increase in summed thermal deterioration $\Sigma TD$. Alternatively, ratio j may be constant irrespective of summed thermal deterioration $\Sigma TD$.

It should be noted that the processing for calculating first estimation line L1 to the processing for calculating fourth estimation line L4 respectively correspond to "first life estimation processing" to "fourth life estimation processing" in accordance with the present disclosure.

Returning to Fig. 7, after calculating four estimation lines L1 to L4 by the life estimation processing, battery ECU 50 advances the processing to S3, to determine to which of Tlim, T1, and T2 upper limit temperature UL of the LLC is set. In the case of UL = Tlim (Tlim in S3), battery ECU 50 determines whether current summed thermal deterioration $\Sigma TD(t)$ obtained by the thermal deterioration evaluation (see Fig. 2) is lower than a reference line L0(t) (S4).

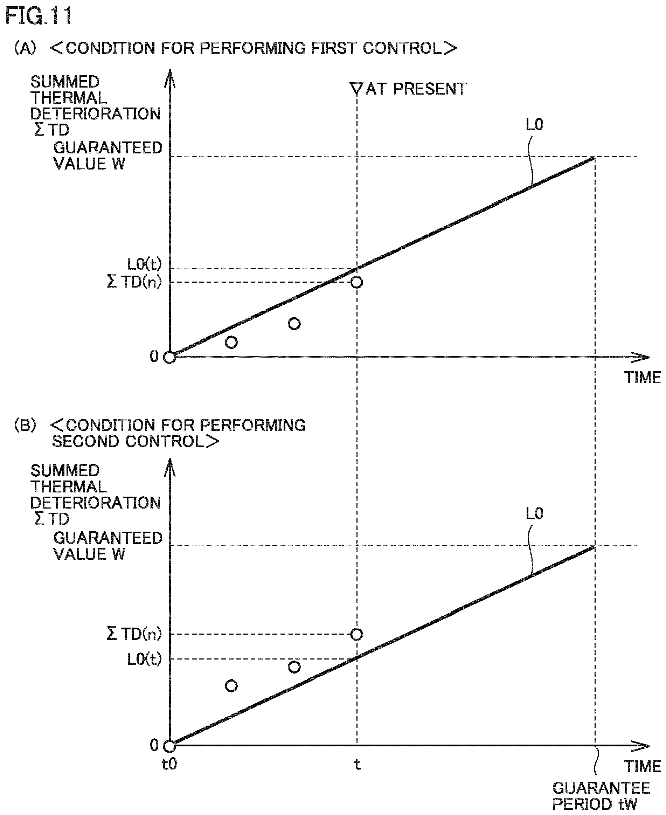

Fig. 11 is a view for illustrating determination processing in S4. When current summed thermal deterioration $\Sigma TD(t)$ is lower than reference line L0(t) as shown in Fig. 11(A) (YES in S4), battery ECU 50 performs first control (S5). In contrast, when current summed thermal deterioration $\Sigma TD(t)$ is higher than or equal to reference line L0(t) as shown in Fig. 11(B) (NO in S4), battery ECU 50 performs second control (S6).

Returning to Fig. 7, in the case of UL = T1 in S3 (T1 in S3), battery ECU 50 performs third control (S7). In the case of UL = T2 (T2 in S3), battery ECU 50 performs fourth control (S8). After one of the first control to the fourth control is performed, the series of processing is terminated. In the following, the details of the first control to the fourth control will be described in order.

< <First Control>>

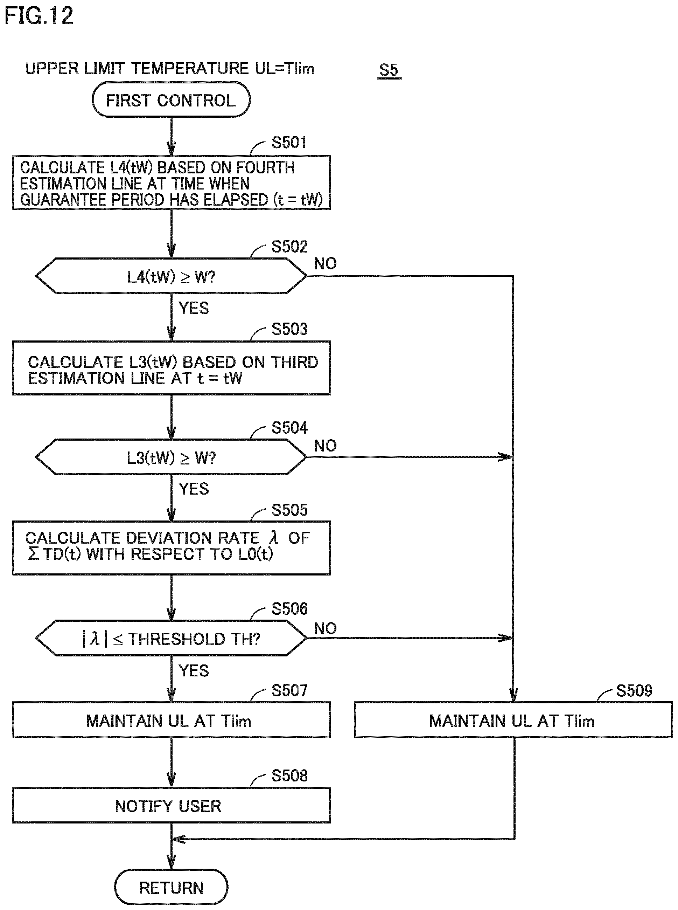

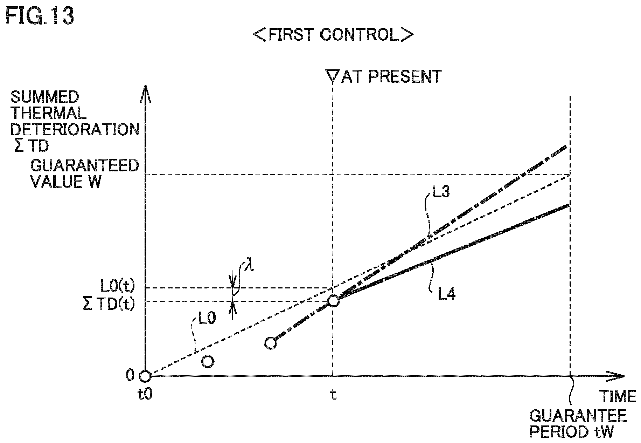

Fig. 12 is a flowchart showing an example of a processing procedure for the first control. Fig. 13 is a time chart for illustrating the first control. The first control is performed when current summed thermal deterioration $\Sigma TD(t)$ is lower than reference line L0(t) (in short, when the thermal deterioration progresses slowly and has a margin to a reference), on condition of upper limit temperature UL = Tlim. In the first control, upper limit temperature UL remains unchanged at Tlim. On the other hand, it is determined whether it is better to suppress further thermal deterioration of the LLC.

Referring to Figs. 12 and 13, in S501, battery ECU 50 calculates L4(tW) that is an estimated value based on the fourth estimation line at the time when the guarantee period has elapsed (t = tW). As described above, the estimated value based on fourth estimation line L4 is a combination of the data prepared beforehand (L1) and data in which the actual status of use of vehicle 1 is reflected (L2), with ratio j.

In S502, battery ECU 50 determines whether L4(tW) at the time when the guarantee period has elapsed is higher than or equal to guaranteed value W (in other words, whether the life of the LLC is longer than the guarantee period). In the case of L4(tW) ≥ W (YES in S502), battery ECU 50 advances the processing to S503. On the other hand, in the case of L4(tW) < W (NO in S502), summed thermal deterioration ΣTD is less likely to exceed guaranteed value W even when the guarantee period has elapsed, and thus battery ECU 50 maintains upper limit temperature UL of the LLC at Tlim (S509).

In S503, battery ECU 50 calculates L3(tW) that is an estimated value based on the third estimation line at the time when the guarantee period has elapsed. As described above, the estimated value based on third estimation line L3 is for reflecting how the LLC has been used lately in the life estimation.

In S504, battery ECU 50 determines whether L3(tW) at the time when the guarantee period has elapsed is higher than or equal to guaranteed value W. In the case of L3(tW) ≥ W (YES in S504), battery ECU 50 advances the processing to S505. On the other hand, in the case of L3(tW) < W (NO in S504), battery ECU 50 maintains upper limit temperature UL of the LLC at Tlim (S509).

In S505, battery ECU 50 calculates a deviation rate (error rate) λ(t) of summed thermal deterioration ΣTD(t) with respect to reference line L0(t) at present (see equation (5)). (The absolute value of) deviation rate λ represents the magnitude of deviation of summed thermal deterioration ΣTD(t) from reference line L0(t). It should be noted that, instead of deviation rate λ, a difference between reference line L0(t) and summed thermal deterioration ΣTD(t) may be used.

$$\lambda(t) = \Sigma TD(t)/L0(t) \ ... \ (5)$$

In S506, battery ECU 50 determines whether the absolute value of deviation rate λ(t) at present is lower than or equal to a predetermined threshold TH. In the case of |λ(t)| ≤ TH (YES in S506), current summed thermal deterioration ΣTD(t) is close to reference line L0(t), and summed thermal deterioration ΣTD(t) may exceed reference line L0(t) in the future. Accordingly, battery ECU 50 maintains upper limit temperature UL of the LLC at Tlim (S507). Furthermore, battery ECU 50 provides a notification (proposal) to a user, via an HMI (Human Machine Interface) not shown, to reduce use manners of vehicle 1 that may cause the thermal deterioration of the LLC (specifically, frequency and/or time of DC charging), as much as possible.

In contrast, in the case of |λ(t)| > TH (NO in S506), current summed thermal deterioration ΣTD(t) has a sufficient margin to reference line L0(t), and thus battery ECU 50 does not provide a notification to the user, and merely maintains upper limit temperature UL of the LLC at Tlim (S509).

When the notification is provided to the user in the first control, upper limit temperature UL of the LLC is not lowered, although summed thermal deterioration ΣTD may exceed guaranteed value W by the time when the guarantee period has elapsed, if things continue as they are. When current summed thermal deterioration ΣTD(t) exceeds reference line L0(t) (NO in S4 in Fig. 7), the second control described below is performed instead of the first control, and upper limit temperature UL of the LLC is lowered.

<<Second Control>>

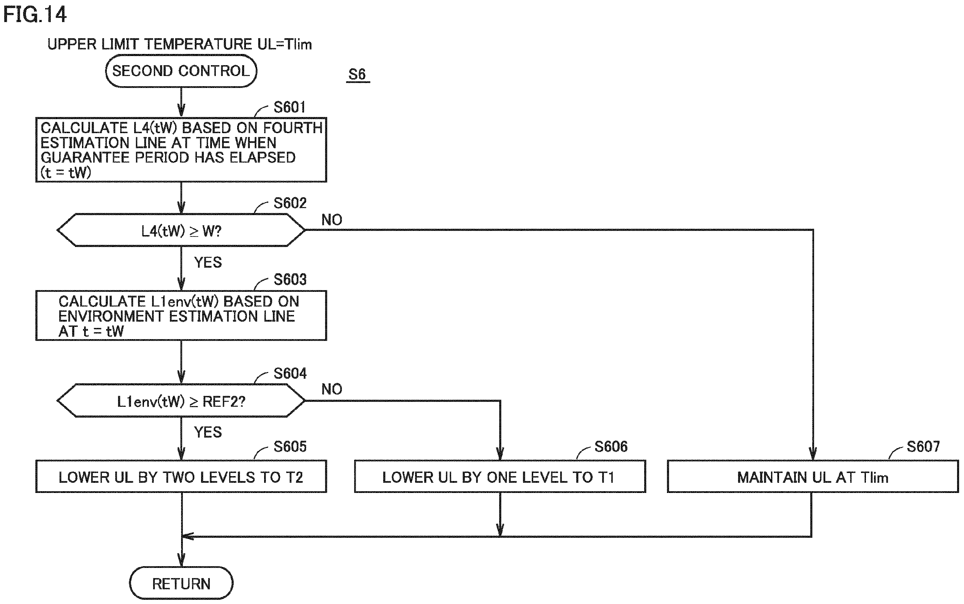

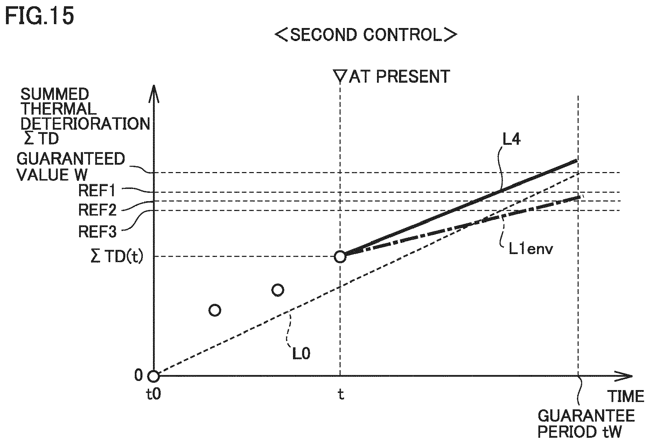

Fig. 14 is a flowchart showing an example of a processing procedure for the second control. Fig. 15 is a time chart for illustrating the second control. The second control is performed when current summed thermal deterioration ΣTD(t) is higher than or equal to reference line L0(t) (in short, when the thermal deterioration progresses more than the reference), on condition of upper limit temperature UL = Tlim. In the second control, upper limit temperature UL can be lowered from Tlim to T1 or T2.

As shown in Fig. 15, in the present embodiment, first reference value REF1 to third reference value REF3 are determined. These three reference values have a magnitude relation of REF1 > REF2 > REF3, and they are all lower than guaranteed value W.

Referring to Figs. 14 and 15, in S601, battery ECU 50 calculates L4(tW) that is an estimated value based on the fourth estimation line at the time when the guarantee period has elapsed (t = tW).

In S602, battery ECU 50 determines whether L4(tW) at the time when the guarantee period has elapsed is higher than or equal to guaranteed value W. In the case of L4(tW) ≥ W (YES in S602), summed thermal deterioration ΣTD may exceed guaranteed value W by the time when the guarantee period has elapsed, if things continue as they are. Further, since the second control is performed, it means that current summed thermal deterioration ΣTD(t) is higher than or equal to reference line L0(t). Therefore, battery ECU 50 advances the processing to S603, to lower upper limit temperature UL of the LLC.

On the other hand, in the case of L4(tW) < W (NO in S602), it is estimated that summed thermal deterioration ΣTD will not exceed guaranteed value W until the guarantee period elapses, although current summed thermal deterioration $\Sigma TD(t)$ is higher than or equal to reference line L0(t). Accordingly, battery ECU 50 maintains upper limit temperature UL of the LLC at Tlim (S607).

In S603, battery ECU 50 calculates Llenv(tW) that is an estimated value based on the environment estimation line at the time when the guarantee period has elapsed. Llenv(tW) is an estimated value of summed thermal deterioration $\Sigma TD$ when the typical temperature load at the location of vehicle 1 continues to be applied to the LLC until the guarantee period elapses. Thermal deterioration due to the typical use load at the location of vehicle 1 is not incorporated into L1env(tW). That is, Llenv(tW) indicates a degree of progress of the thermal deterioration of the LLC when vehicle 1 is left unused until the guarantee period elapses.

In S604, battery ECU 50 determines whether Llenv(tW) at the time when the guarantee period has elapsed is higher than or equal to second reference value REF2. In the case of Llenv(tW) $\geq$ REF2 (YES in S604), battery ECU 50 lowers upper limit temperature UL of the LLC by two levels and sets it to T2 (S605). This can prevent summed thermal deterioration $\Sigma TD$ from reaching guaranteed value W despite that vehicle 1 is merely left unused until the guarantee period elapses.

On the other hand, in the case of Llenv(tW) < REF2 (NO in S604), battery ECU 50 lowers upper limit temperature UL of the LLC by one level and sets it to T1 (S606), in order to minimize degradation of the charging/discharging performance of battery 10 (to mitigate the effect on the charging/discharging performance).

Unlike the first control, in the second control, the estimated value based on the third estimation line is not used. This is because, since the thermal deterioration has already progressed more than the reference ($\Sigma TD(t)$ $\geq$ L0(t)) up to the present time when the second control is performed, upper limit temperature UL of the LLC is lowered irrespective of how the LLC has been used lately. That is, in the second control, priority is given to suppression of the deterioration of the LLC, when compared with the first control.

It should be noted that, when upper limit temperature UL of the LLC is lowered, the frequency at which DC charging is allowed (the number of times of charging allowed in a predetermined period) may be reduced in addition thereto. In the case of upper limit temperature UL = Tlim, the frequency is the highest (restriction on the number of times of charging is the loosest). In the case of upper limit temperature UL = T1, the frequency is moderate. In the case of upper limit temperature UL = T2, the frequency is the lowest (restriction on the number of times of charging is the severest). Thereby, the thermal deterioration of the LLC can be further suppressed.

< <Third Control>>

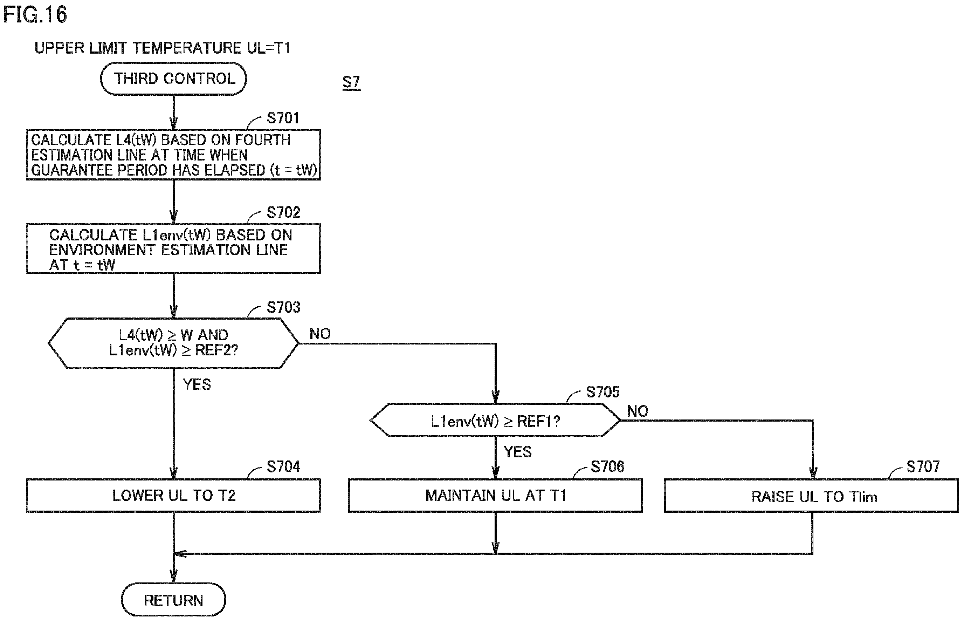

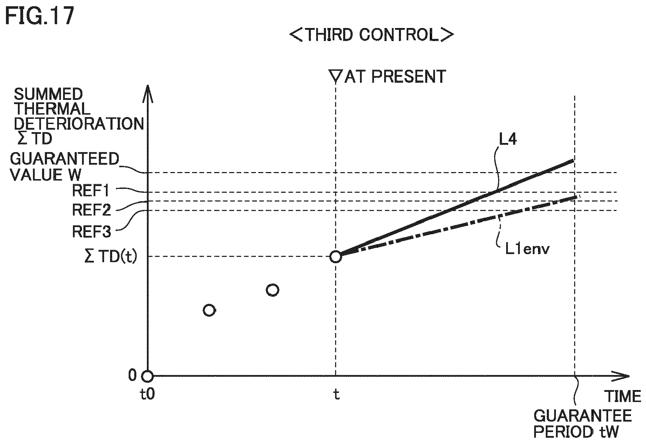

Fig. 16 is a flowchart showing an example of a processing procedure for the third control. Fig. 17 is a time chart for illustrating the third control. The third control is performed when upper limit temperature UL of the LLC is T1. In the third control, upper limit temperature UL may be maintained at T1, upper limit temperature UL may be raised to Tlim, or upper limit temperature UL may be lowered to T2.

Referring to Figs. 16 and 17, in S701, battery ECU 50 calculates L4(tW) that is an estimated value based on the fourth estimation line at the time when the guarantee period has elapsed. Furthermore, battery ECU 50 calculates Llenv(tW) that is an estimated value based on the environment estimation line at the time when the guarantee period has elapsed (S702).

In S703, battery ECU 50 determines whether L4(tW) is higher than or equal to guaranteed value W and Llenv(tW) is higher than or equal to second reference value REF2. In the case of L4(tW) $\geq$ W and Llenv(tW) $\geq$ REF2 (YES in S703), battery ECU 50 lowers upper limit temperature UL of the LLC and sets it to T2 (S704). In the case of L4(tW) < W or Llenv(tW) < REF2 (NO in S703), battery ECU 50 advances the processing to S705.

In S705, battery ECU 50 determines whether Llenv(tW) is higher than or equal to first reference value REF1. In the case of Llenv(tW) $\geq$ REF1 (YES in S705), battery ECU 50 maintains upper limit temperature UL of the LLC at T1 (S706). On the other hand, in the case pf Llenv(tW) < REF1 (NO in S705), battery ECU 50 raises upper limit temperature UL of the LLC and sets it to Tlim (S707).

< <Fourth Control> >

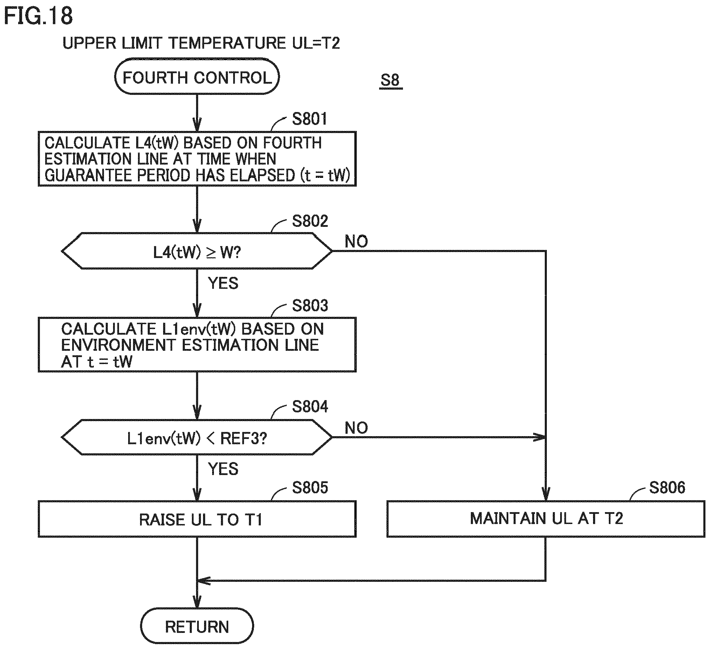

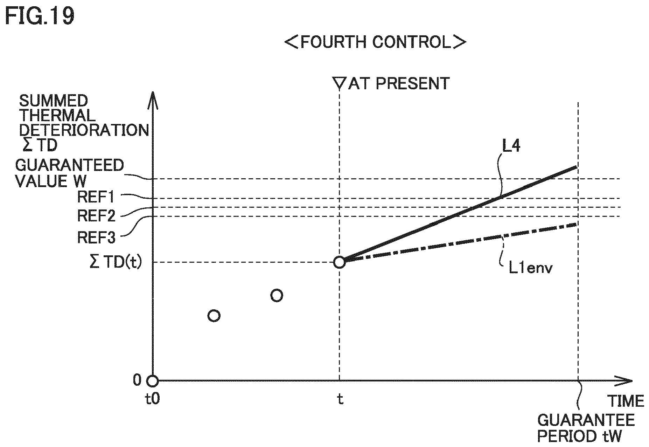

Fig. 18 is a flowchart showing an example of a processing procedure for the fourth control. Fig. 19 is a time chart for illustrating the fourth control. The fourth control is performed when upper limit temperature UL is T2. In the fourth control, upper limit temperature UL is maintained at T2, or is raised by one level to T1.

Referring to Figs. 18 and 19, in S801, battery ECU 50 calculates L4(tW) that is an estimated value based on the fourth estimation line at the time when the guarantee period has elapsed.

In S802, battery ECU 50 determines whether L4(tW) is higher than or equal to guaranteed value W. In the case of L4(tW) $\geq$ W (YES in S802), battery ECU 50 advances the processing to S803. On the other hand, in the case of L4(tW) < W (NO in S802), battery ECU 50 maintains upper limit temperature UL of the LLC at T2 (S806).

In S803, battery ECU 50 calculates Llenv(tW) that is an estimated value based on the environment estimation line at the time when the guarantee period has elapsed (t = tW).

In S804, battery ECU 50 determines whether Llenv(tW) is lower than third reference value REF 3. In the case of Llenv(tW) < REF3 (YES in S804), battery ECU 50 raises upper limit temperature UL of the LLC and sets it to T1 (S805). On the other hand, in the case of Llenv(tW) ≥ REF3 (NO in S804), battery ECU 50 maintains upper limit temperature UL of the LLC at T2 (S806).

It is also conceivable to use a common reference value for the raising of upper limit temperature UL of the LLC in the third control and the lowering of upper limit temperature UL of the LLC in the fourth control. However, in the present embodiment, second reference value REF2 and third reference value REF3 that are different from each other are used (REF2 > REF3). In the third control, upper limit temperature UL of the LLC is not lowered until Llenv(tW) exceeds second reference value REF2 (YES in S703; S704). In the fourth control, upper limit temperature UL of the LLC is not raised until Llenv(tW) becomes lower than third reference value REF3 (YES in S804; S805). Providing two types of reference values in this manner corresponds to providing hysteresis to the reference values. This can prevent unnecessary switching (so-called chattering) of upper limit temperature UL of the LLC.

As described above, in the present embodiment, when the thermal deterioration of the heat medium does not progress (YES in S4), the heating performance of the heat medium can be improved by setting upper limit temperature UL to Tlim (the first control). On the other hand, when the thermal deterioration of the heat medium progresses (NO in S4), further progress of the thermal deterioration of the heat medium can be suppressed by setting upper limit temperature UL to T1 or T2 (the second control to the fourth control). Therefore, according to the present embodiment, it is possible to secure the performance and suppress the deterioration of the heat medium.

Although the embodiment of the present disclosure has been described, it should be understood that the embodiment disclosed herein is illustrative and non-restrictive in every respect. The scope of the present disclosure is defined by the scope of the claims, and is intended to include any modifications within the scope and meaning equivalent to the scope of the claims.

**Claims**

1. A controller (50) for a heating system (40) that heats a battery (10) using a liquid heat medium, the controller (50) comprising:

   a processor (51) configured to calculate an upper limit temperature of the heat medium during heating of the battery (10), wherein the processor (51) is configured to lower the upper limit temperature, as thermal deterioration of the heat medium progresses.

2. The controller (50) according to claim 1, wherein the processor (51) is configured to:

   calculate an index indicating a degree of progress of the thermal deterioration of the heat medium based on a temperature of the heat medium,
   estimate a life of the heat medium based on the index, and
   lower the upper limit temperature when the life is estimated to be shorter than a predetermined period, when compared with a case where the life is estimated to be longer than the predetermined period.

3. The controller (50) according to claim 2, wherein

   the processor (51) is configured to repeatedly perform computation processing for calculating the index, and
   the computation processing includes processing of

      calculating, based on the temperature of the heat medium in a period from a previous computation to a current computation, a micro index indicating a degree of progress of the thermal deterioration of the heat medium in the period, and
      calculating the index up to the current computation, by adding the micro index in the period, to the index up to the previous computation.

4. The controller (50) according to claim 3, wherein the processor (51) is configured to calculate the micro index based on a product of a frequency of the temperature of the heat medium in the period and a coefficient determined for each temperature of the heat medium.

5. The controller (50) according to claim 3, wherein the processor (51) is configured to shorten a computation interval of the computation processing, as the index indicates that the thermal deterioration of the heat medium progresses.

6. The controller (50) according to any one of claims 2 to 5, wherein

   the processor (51) is configured to perform first life estimation processing, and
   the first life estimation processing includes processing of calculating the index based on information of a region where the heating system (40) is used.

7. The controller (50) according to claim 6, wherein the first life estimation processing includes processing of calculating the index when a temperature load in the region where the heating system (40) is used is applied to the heat medium.

8. The controller (50) according to claim 6, wherein the first life estimation processing includes processing of calculating the index when a use load in the region where the heating system (40) is used is applied to the heat medium.

9. The controller (50) according to any one of claims 3 to 5, wherein

the processor (51) is configured to perform second life estimation processing, and
the second life estimation processing includes processing of estimating the life by regression analysis of the index over an entire period.

10. The controller (50) according to any one of claims 3 to 5, wherein

the processor (51) is configured to perform third life estimation processing, and
the third life estimation processing includes processing of estimating the life by regression analysis of a portion of the index over an entire period, the portion including the index up to the current computation.

11. The controller (50) according to any one of claims 3 to 5, wherein

the processor (51) is configured to perform fourth life estimation processing,
the fourth life estimation processing includes processing of combining a result of first life estimation processing and a result of second life estimation processing,
the first life estimation processing includes processing of calculating the index based on information of a region where the heating system (40) is used, and
the second life estimation processing includes processing of estimating the life by regression analysis of the index over an entire period.

12. The controller (50) according to claim 11, wherein the processor (51) is configured to increase a ratio of the result of the second life estimation processing used for the fourth life estimation processing, as the index indicates that the thermal deterioration of the heat medium progresses.

13. The controller (50) according to any one of claims 2 to 5, wherein the predetermined period is a guarantee period for the heat medium.

14. A vehicle (1) comprising:

the controller (50) according to any one of claims 1 to 5; and
the heating system (40).

15. A method for managing a heat medium, the method comprising:

calculating an upper limit temperature of a liquid heat medium; and
heating a battery (10) using the heat medium, wherein
the calculating includes lowering the upper limit temperature, as thermal deterioration of the heat medium progresses.

FIG.1

# FIG.2

<THERMAL DETERIORATION EVALUATION>

```
        ( START )
            │
            ▼                          ⌐ S101
┌──────────────────────────────────┐
│ CALCULATE COMPUTATION INTERVAL   │
│ FROM ΣTD(t-1) TO DETERMINE       │
│ COMPUTATION TIMING               │
└──────────────────────────────────┘
            │
            ▼                          ⌐ S102
┌──────────────────────────────────┐
│ OBTAIN COOLANT TEMPERATURE TC    │
└──────────────────────────────────┘
            │
            ▼                          ⌐ S103
┌──────────────────────────────────┐
│ OBTAIN FREQUENCY f FOR EACH      │
│ TEMPERATURE                      │
└──────────────────────────────────┘
            │
            ▼                          ⌐ S104
         ┌──────────────────────┐  NO
        ◁  HAS COMPUTATION       ▷────►
         │  TIMING ARRIVED?      │
         └──────────────────────┘
            │ YES
            ▼                          ⌐ S105
┌──────────────────────────────────┐
│ CALCULATE THERMAL DETERIORATION  │
│ TD(t)                            │
│        TD(t)= Σ (f × k)          │
└──────────────────────────────────┘
            │
            ▼                          ⌐ S106
┌──────────────────────────────────┐
│ CALCULATE SUMMED THERMAL         │
│ DETERIORATION ΣTD(t)             │
│      ΣTD(t)= Σ TD(t-1)+TD(t)     │
└──────────────────────────────────┘
            │
            ▼
        ( RETURN )
```

## FIG.3

COMPUTATION INTERVAL

0

SUMMED THERMAL DETERIORATION $\Sigma$ TD

## FIG.4

FREQUENCY f

0

COOLANT TEMPERATURE TC

DETERIORATION FACTOR k

1

0

Tcmp

COOLANT TEMPERATURE TC

FIG.5

<COMPARATIVE EXAMPLE>

COOLANT
TEMPERATURE
TC

Tcmp

0

TIME

SUMMED
THERMAL
DETERIORATION
ΣTD

GUARANTEED
VALUE W

COMPARATIVE
EXAMPLE L0
(UL=Tcmp(CONSTANT))

0
t0

TIME

GUARANTEE
PERIOD tW

16

# FIG.6

COOLANT TEMPERATURE TC

<PRESENT EMBODIMENT>

Tlim
T1
T2
Tcmp

0

TIME

SUMMED THERMAL DETERIORATION ΣTD

GUARANTEED VALUE W

COMPARATIVE EXAMPLE (REFERENCE LINE L0)

PRESENT EMBODIMENT

0
t0    t1    t2

TIME

GUARANTEE PERIOD tW

FIG.7

<UPPER LIMIT TEMPERATURE CONTROL>

START

S2 LIFE ESTIMATION PROCESSING

S3 UL?

T1 → THIRD CONTROL S7 → END

T2 → FOURTH CONTROL S8 → END

Tlim → S4 $\Sigma$ TD(t) < L0(t)?
- YES → FIRST CONTROL S5
- NO → SECOND CONTROL S6

## FIG.8

```
        ┌─────────────────────────┐
        │   LIFE ESTIMATION       │           S2
        │   PROCESSING            │
        └─────────────────────────┘
                    │
                    ▼           ┌ S201    ┐
        ┌─────────────────────────┐       │
        │ OBTAIN REGIONAL INFORMATION │     │
        └─────────────────────────┘       │
                    │                      │
                    ▼           ┌ S202     │
        ┌─────────────────────────┐       │
        │ CALCULATE ENVIRONMENT   │       │
        │ ESTIMATION LINE L1env BASED ON │  │
        │ REGIONAL TEMPERATURE    │       │
        └─────────────────────────┘       │
                    │                      ├ L1
                    ▼           ┌ S203     │
        ┌─────────────────────────┐       │
        │ CALCULATE USE ESTIMATION LINE │  │
        │ L1use BASED ON REGIONAL LOAD │   │
        └─────────────────────────┘       │
                    │                      │
                    ▼           ┌ S204     │
        ┌─────────────────────────┐       │
        │ CALCULATE FIRST ESTIMATION LINE │ │
        │ L1 FROM L1env AND L1use │       │
        └─────────────────────────┘       ┘
                    │
                    ▼           ┌ S205
        ┌─────────────────────────┐
        │ CALCULATE SECOND ESTIMATION │
        │ LINE L2 BY APPROXIMATION OF ΣTD │
        │ OVER ENTIRE PERIOD      │
        └─────────────────────────┘
                    │
                    ▼           ┌ S206
        ┌─────────────────────────┐
        │ CALCULATE THIRD ESTIMATION LINE │
        │ L3 BASED ON ΣTD(t-1) AND ΣTD(t) │
        └─────────────────────────┘
                    │
                    ▼           ┌ S207
        ┌─────────────────────────┐
        │ CALCULATE FOURTH ESTIMATION │
        │ LINE L4 BY COMBINING L1 AND L2 │
        │ WITH RATIO j            │
        └─────────────────────────┘
                    │
                    ▼
        ┌─────────────────────────┐
        │        RETURN           │
        └─────────────────────────┘
```

FIG.9

(A)

$\Sigma$ TD

$\triangledown$ AT PRESENT

GUARANTEED
VALUE W

L0

0

TIME

(B)

$\Sigma$ TD

L1

L1use

L1env

0

TIME

(C)

$\Sigma$ TD

L2

$\Sigma$ TD(t3)

$\Sigma$ TD(t2)

$\Sigma$ TD(t1)

0

TIME

(D)

$\Sigma$ TD

L3b  L3c

$\Sigma$ TD(t3)

$\Sigma$ TD(t2)

$\Sigma$ TD(t1)

L3a

0

TIME

(E)

$\Sigma$ TD

L2  L4

L1

0

t0

t3

TIME

GUARANTEE
PERIOD tW

FIG.10

RATIO j

SUMMED THERMAL
DETERIORATION Σ TD

## FIG.11

(A) <CONDITION FOR PERFORMING FIRST CONTROL>

$\nabla$ AT PRESENT

SUMMED THERMAL DETERIORATION $\Sigma$ TD

GUARANTEED VALUE W

L0

L0(t)
$\Sigma$ TD(n)

0

TIME

(B) <CONDITION FOR PERFORMING SECOND CONTROL>

SUMMED THERMAL DETERIORATION $\Sigma$ TD

GUARANTEED VALUE W

L0

$\Sigma$ TD(n)
L0(t)

0
t0

t

TIME

GUARANTEE PERIOD tW

## FIG.12

UPPER LIMIT TEMPERATURE UL=Tlim     S5

( FIRST CONTROL )

S501
CALCULATE L4(tW) BASED ON FOURTH
ESTIMATION LINE AT TIME WHEN
GUARANTEE PERIOD HAS ELAPSED (t = tW)

S502
L4(tW) ≥ W?  —NO→

YES

S503
CALCULATE L3(tW) BASED ON THIRD
ESTIMATION LINE AT t = tW

S504
L3(tW) ≥ W?  —NO→

YES

S505
CALCULATE DEVIATION RATE $\lambda$ OF
$\Sigma$ TD(t) WITH RESPECT TO L0(t)

S506
$|\lambda| \leq$ THRESHOLD TH?  —NO→

YES

S507
MAINTAIN UL AT Tlim

S509
MAINTAIN UL AT Tlim

S508
NOTIFY USER

( RETURN )

FIG.13

<FIRST CONTROL>

▽AT PRESENT

SUMMED
THERMAL
DETERIORATION
Σ TD

GUARANTEED
VALUE W

L3

L0(t)
Σ TD(t)

λ

L0

L4

0
t0

t

TIME
GUARANTEE
PERIOD tW

# FIG.14

UPPER LIMIT TEMPERATURE UL=Tlim

$\underline{S6}$

$$\text{(SECOND CONTROL)}$$

S601
CALCULATE L4(tW) BASED ON FOURTH
ESTIMATION LINE AT TIME WHEN
GUARANTEE PERIOD HAS ELAPSED
(t = tW)

S602
L4(tW) ≥ W? ── NO ──────────────┐

│ YES

S603
CALCULATE L1env(tW) BASED ON
ENVIRONMENT ESTIMATION LINE
AT t = tW

S604
L1env(tW) ≥ REF2? ── NO ──┐

│ YES

S605                         S606                          S607
LOWER UL BY TWO LEVELS TO T2   LOWER UL BY ONE LEVEL TO T1    MAINTAIN UL AT Tlim

$$\text{(RETURN)}$$

# FIG.15

<SECOND CONTROL>

# FIG.16

UPPER LIMIT TEMPERATURE UL=T1

( THIRD CONTROL )  <u>S7</u>

S701

CALCULATE L4(tW) BASED ON FOURTH
ESTIMATION LINE AT TIME WHEN
GUARANTEE PERIOD HAS ELAPSED (t = tW)

S702

CALCULATE L1env(tW) BASED ON
ENVIRONMENT ESTIMATION LINE
AT t = tW

S703

L4(tW) ≥ W AND
L1env(tW) ≥ REF2?  — NO →

YES

S705

L1env(tW) ≥ REF1?  — NO →

YES

S704
LOWER UL TO T2

S706
MAINTAIN UL AT T1

S707
RAISE UL TO Tlim

( RETURN )

# FIG.17

<THIRD CONTROL>

∇AT PRESENT

SUMMED THERMAL DETERIORATION ΣTD

GUARANTEED VALUE W

REF1
REF2
REF3

ΣTD(t)

L4

L1env

0
t0

t

TIME

GUARANTEE PERIOD tW

# FIG.18

UPPER LIMIT TEMPERATURE UL=T2

$\underline{S8}$

( FOURTH CONTROL )

S801
CALCULATE L4(tW) BASED ON FOURTH ESTIMATION LINE AT TIME WHEN GUARANTEE PERIOD HAS ELAPSED (t = tW)

S802
L4(tW) ≥ W? — NO →

YES

S803
CALCULATE L1env(tW) BASED ON ENVIRONMENT ESTIMATION LINE AT t = tW

S804
L1env(tW) < REF3? — NO →

YES

S805
RAISE UL TO T1

S806
MAINTAIN UL AT T2

( RETURN )

EP 4 468 457 A1

# FIG.19

<FOURTH CONTROL>

**EUROPEAN SEARCH REPORT**

Europäisches Patentamt
European Patent Office
Office européen des brevets

**Application Number**

EP 24 16 7005

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2021 138322 A (HONDA MOTOR CO LTD) 16 September 2021 (2021-09-16) * paragraph [0006] * * paragraph [0012] * * paragraph [0014] - paragraph [0015] * * paragraph [0033] - paragraph [0034] * * paragraph [0036] - paragraph [0038] * * paragraph [0040] - paragraph [0043] * * paragraph [0045] - paragraph [0046] * * paragraph [0050] * * paragraph [0057] - paragraph [0060] * * paragraph [0069] - paragraph [0070] * * paragraph [0074] - paragraph [0075] * * figures 1-6 * | 1-15 | INV. H01M10/615 H01M10/625 H01M10/633 H01M10/6567 B60H1/00 |
| A | DE 10 2015 200700 A1 (SIEMENS AG [DE]) 21 July 2016 (2016-07-21) * paragraph [0023] - paragraph [0024] * * paragraph [0040] - paragraph [0056] * * figure 1 * | 1-15 | |
| A | CN 116 023 912 A (HEFEI HUAQING HIGH TECH SURFACE TECH CO LTD) 28 April 2023 (2023-04-28) * the whole document * | 1-15 | **TECHNICAL FIELDS SEARCHED (IPC)** H01M B60L B60H |
| A | US 4 164 253 A (SKALA STEPHEN F [US]) 14 August 1979 (1979-08-14) * the whole document * | 1-15 | |

-/--

The present search report has been drawn up for all claims

| Place of search | Date of completion of the search | Examiner |
|---|---|---|
| The Hague | 10 September 2024 | Bossa, Christina |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches Patentamt
European Patent Office
Office européen des brevets

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2020/152404 A1 (PSA AUTOMOBILES SA [FR]) 30 July 2020 (2020-07-30)<br>* paragraph [0004] *<br>* paragraph [0006] - paragraph [0011] *<br>* paragraph [0013] *<br>* paragraph [0025] *<br>* paragraph [0035] *<br>* paragraph [0039] - paragraph [0040] *<br>* paragraph [0048] - paragraph [0050] *<br>* figures 1-4 *<br>----- | 1-15 | |

| | | | TECHNICAL FIELDS SEARCHED (IPC) |
|---|---|---|---|

The present search report has been drawn up for all claims

| Place of search | Date of completion of the search | Examiner |
|---|---|---|
| The Hague | 10 September 2024 | Bossa, Christina |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 16 7005

This annex lists the patent family members relating to the patent documents cited in the above-mentioned European search report.
The members are as contained in the European Patent Office EDP file on
The European Patent Office is in no way liable for these particulars which are merely given for the purpose of information.

10-09-2024

| Patent document cited in search report | | Publication date | Patent family member(s) | | Publication date |
|---|---|---|---|---|---|
| JP 2021138322 | A | 16-09-2021 | NONE | | |
| DE 102015200700 | A1 | 21-07-2016 | DE 102015200700 | A1 | 21-07-2016 |
| | | | WO 2016116400 | A1 | 28-07-2016 |
| CN 116023912 | A | 28-04-2023 | NONE | | |
| US 4164253 | A | 14-08-1979 | NONE | | |
| WO 2020152404 | A1 | 30-07-2020 | CN 113329905 | A | 31-08-2021 |
| | | | EP 3914472 | A1 | 01-12-2021 |
| | | | FR 3091839 | A1 | 24-07-2020 |
| | | | WO 2020152404 | A1 | 30-07-2020 |

EPO FORM P0459

For more details about this annex : see Official Journal of the European Patent Office, No. 12/82

**EP 4 468 457 A1**

**REFERENCES CITED IN THE DESCRIPTION**

**Patent documents cited in the description**

- JP 2023083685 A
- JP 2016112933 A